(19) Europäisches Patentamt
European Patent Office
Office européen des brevets

(11) Veröffentlichungsnummer: **0 210 377**
**A1**

(12) **EUROPÄISCHE PATENTANMELDUNG**

(21) Anmeldenummer: 86107469.8

(22) Anmeldetag: 02.06.86

(51) Int. Cl.⁴: **C08G 75/04**

(30) Priorität: 25.07.85 DE 3526619
12.02.86 DE 3604369

(43) Veröffentlichungstag der Anmeldung:
**04.02.87 Patentblatt 87/06**

(84) Benannte Vertragsstaaten:
**AT BE CH DE FR GB IT LI NL**

(71) Anmelder: **HÜLS AKTIENGESELLSCHAFT**
**Patentabteilung / PB 15 - Postfach 13 20**
**D-4370 Marl 1(DE)**

(72) Erfinder: **Neugebauer, Wolfgang, Dr.**
**Holunderstrasse 9**
**D-4370 Marl(DE)**
Erfinder: **Bartmann, Martin, Dr.**
**Burgstrasse 35**
**D-4350 Recklinghausen(DE)**

(54) **Homo- und copolymere ketogruppenhaltige Polyarylensulfide und Verfahren zu ihrer Herstellung.**

(57) Die Erfindung betrifft homo-und copolymere Polyarylensulfide, die wiederkehrende Einheiten der Formel

$$-\!\!\left(\text{Ar} - \text{CO} - \text{Ar} - \text{CO} - \text{Ar} - \text{S}\right)\!\!-$$

enthalten und durch Umsetzung von sulfidfreisetzenden Reagenzien (I) und gegebenenfalls anorganischen Basen (II) mit einem difunktionellen aromatischen Keton (III) der Formel

Hal -Ar -CO -Ar -CO -Ar -Hal

und gegebenenfalls einer weiteren difunktionellen Verbindung der Formel IV oder V

Hal -Ar -X -(Ar -Y)$_n$ -Ar -Hal IV

Hal -Ar -X -Ar -(Y)$_n$ -Ar -X -Ar -Hal V

erhalten werden.

EP 0 210 377 A1

## Homo-und copolymere ketogruppenhaltige Polyarylensulfide und Verfahren zu ihrer Herstellung

Die Erfindung betrifft lineare Homo-und Copolymere von Polyarylensulfiden, die aromatisch gebundene Carbonyl-sowie gegebenenfalls auch Ether-und/oder Sulfongruppen enthalten.

Aromatische Polyether-und -thioetherketone der allgemeinen Formel

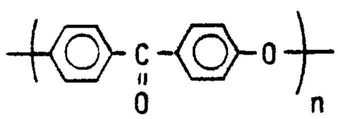

bzw.

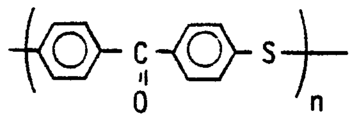

sind bekannt (vgl. US-PS 3 442 857 bzw. DE-OS 21 64 291). Beide Polymere sind kristallin und besitzen einen derart hohen Schmelzpunkt ($T_m$ 367 °C bzw. 352 °C), daß ihre Verarbeitung mit konventionellen Mitteln nur schwer möglich ist.

Polyphenylensulfide sind ebenfalls bekannt - (vgl. US-PSS 2 538 941, 2 513 188 und DE-AS 14 68 782). Sie können durch Reaktion von Dihalogenaromaten mit Alkali-oder Erdalkalisulfiden in Masse oder in polaren Lösemitteln hergestellt werden. Als Aktivatoren werden vor allem Alkalicarboxylate eingesetzt (vgl. DE-PS 24 53 749, DE-OS 26 23 363, US-PS 4 038 259 und US-PS 4 038 263). Anstelle von Alkalisulfiden können auch organische Thioverbindungen eingesetzt werden.

Das Verfahren der DE-AS 16 20 923 weist den Nachteil auf, daß sich während der Entwässerung des wasserhaltigen Alkalisulfids feste Klumpen von wasserfreiem Salz bilden, die auch unter drastischen Reaktionsbedingungen nicht vollständig zur Reaktion zu bringen sind.

Im allgemeinen müssen die so hergestellten Polyphenylensulfide zur Eigenschaftsverbesserung noch einem an die Polykondensation anschließenden Härtungsschritt unterworfen werden - (z. B. US-PSS 3 717 620, 3 524 835 und 3 839 301), bei dem über Vernetzungsreaktionen die zur Anwendung ausreichend hohen Molekulargewichte aufgebaut werden. Dies bedeutet aber, daß nunmehr die Gefahr des Verlustes thermoplastischer Eigenschaften besteht. Auch durch die Mitverwendung von Tri-und Polyhalogenaromaten und die daraus resultierende Vernetzung läßt sich eine Erhöhung des Molekulargewichts erzielen (vgl. DE-OSS 28 17 731 und 32 05 996).

Nach dem Stand der Technik werden Polyarylensulfide mit hohen Molekulargewichten, die für Formassen geeignet sind, üblicherweise nur zweistufig oder unter Zusatz von Vernetzungsmitteln erhalten. Nachteilig bei der 2-stufigen Verfahrensweise ist jedoch, daß bei den hohen Temperaturen, die zur vollständigen Entfernung des Wassers erforderlich sind, Reaktionen des Lösemittels mit Wasser auftreten, wobei Schwefelwasserstoff entweicht und die Stöchiometrie der Reaktion in unkontrollierbarer Weise gestört wird.

Die DE-PS 24 53 749 (= US-PS 3 919 177) beschreibt ein Verfahren zur Herstellung eines p-Phenylensulfidpolymeren, wobei ein p-Dihalogenbenzol bei 230 -450 °C mit einer S-haltigen Verbindung in Gegenwart eines organischen Amids, eines Alkalicarboxylats und gegebenenfalls einer Base umgesetzt wird.

Die DE-OS 27 49 645 beschreibt Polyether, die durch Kondensation von Bisphenolen mit Dihalogenbenzolverbindungen oder durch Kondensation von Halogenphenolen erhalten werden. Nach den Ansprüchen 3 und 5 soll es auch möglich sein, als Comonomere Thiophenole einzusetzen. Es überrascht nicht, daß sich hierfür in der angegebenen Schrift keine experimentellen Hinweise finden, da Thiophenole bekanntlich außerordentlich oxidationsempfindlich sind.

Es sind fernerschwefelhaltige Polymere auf Basis des nur aufwendig herstellbaren 4,4'-Difluorbenzophenons, Hydrochinons und Thiodiphenols bekannt, die in Gegenwart von Alkylicarbonaten hergestellt werden. Nachteilig ist die geringe Reaktionsgeschwindigkeit, die Temperaturen über 300 °C erforderlich macht (vgl. EP-PS 0 001 879, EP-OS 0 010 868 und US-PS 4 176 222).

Ein Ziel der vorliegenden Erfindung war es, homo-und copolymere Polyarylensulfide mit verbesserten Materialeigenschaften zugänglich zu machen. Ein weiteres Ziel bestand darin, das Verfahren zur Herstellung dieser Polyarylensulfide zu vereinfachen und zu verbessern.

Es wurden jetzt leicht zugängliche homo-und copolymere Polyarylensulfide mit wiederkehrenden Einheiten der Formel

( Ar -CO -Ar -CO -Ar -S )

gefunden.

Die Polymere können daneben wiederkehrende Einheiten der Formeln

-AR -X -(Ar -Y)$_n$ -AR -S -

oder

-Ar -X -Ar -(Y)$_n$ -Ar -X -Ar -S -

enthalten.

Dabei steht Ar für folgende Gruppierungen:

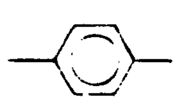

und/oder

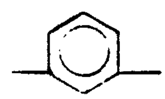

X und Y stehen unabhänging voneinander für die Ether-, Thioether-, Carbonyl-oder Sulfongruppe.

n hat die Bedeutung von 0 oder 1.

Schließlich erhält man weitere wiederkehrende Einheiten dadurch, daß an Stelle des Sulfidions teilweise Bisthiphenolat-oder Bisphenolationen eingebaut werden (siehe auch weiter unten).

Vorzugsweise haben die wiederkehrenden Polyarylensulfideinheiten die Formel:

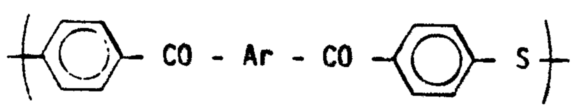

Gegenstand der vorliegenden Erfindung sind die Verfahren zur Herstellung dieser homo-und copolymeren Polyarylensulfide nach den Ansprüchen 1 bis 9 sowie die Polymeren nach den Ansprüchen 10 bis 12.

Der Erweichungspunkt dieser neuen Polymeren liegt in der Regel über 300 °C. Sie sind durch Umsetzung von sulfidfreisetzenden Reagenzien, anorganischen Basen, einem difunktionellen aromatischen Keton und gegebenenfalls einer weiteren difunktionellen aromatischen Verbindung erhältlich. Damit wird der vorbeschriebenen Klasse der Polyphenlensulfide, deren Erweichungspunkt bei etwa 280 °C liegt, ein neuer anspruchsvoller Bereich erschlossen.

Als sulfidfreisetzende Reagenzien I können Alkali-und Erdalkalisulfide, elementarer Schwefel, Xanthogenate, Thiosulfate, Thioamide oder Thiocarbamate sowie deren Mischungen eingesetzt werden. Es ist auch möglich, Gemische der soeben aufgeführten Verbindungen mit bis zu 50 Mol-% Alkalibisthiophenolaten oder Alkalibisphenolaten einzusetzen. Bevorzugt wird Natriumsulfid verwendet.

Setzt man als sulfidfreisetzende Verbindung ein Alkalisulfid oder ein Mercaptid ein, so kommt es unmittelbar zur Ausbildung von Oligo-und Polymeren. Setzt man jedoch eine andere sulfidfreisetzende Verbindung ein, so ist es erforderlich, eine Base II zuzusetzen. Geeignete Basen sind beispielsweise (Erd) Alkalihydroxide und -carbonate. Bezogen auf 1 Mol sulfidfreisetzendem Reagenz - (I) können bis 10 Mol II eingesetzt werden.

Die Homopolymeren werden durch Umsetzung eines difunktionellen aromatischen Ketons III der allgemeinen Formel

Hal-Ar-CO-Ar-CO-Hal,

vorzugsweise 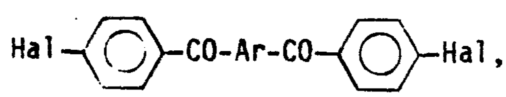

wobei Hal für Fluor oder insbesondere Chlor steht, und Ar die difunktionellen aromatischen Reste

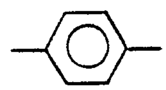 oder 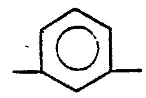

bezeichnet, mit den vorstehend beschriebenen -schwefelhaltigen Verbindungen I, gegebenenfalls in Anwesenheit einer anorganischen Base II, erhalten.

Selbstverständlich kann man auch von Isomerengemischen der Formel III ausgehen.

Die Copolymeren werden duch Einsatz von mindestens 1 Mol-%, insbesondere mindestens 10 Mol-%, eines oder mehrerer difunktioneller aromatischer Ketone III und bis zu 99 Mol-% difunktioneller aromatischer Verbindungen der Formel

Hal -Ar - X -(Ar -Y)$_n$-Ar -Hal IV

oder

Hal -Ar -X -Ar-(Y)$_n$-Ar -X -Ar -Hal V

hergestellt.

Dabei steht Hal für Fluor oder insbesondere Chlor.

Ar, X, Y und n haben die bereits aufgeführten Bedeutingen.

Besonders bevorzugte difunktionelle Verbindungen IV sind 4,4'-Dichlordiphenylsulfon und 4,4'-Dichlorbenzophenon sowie 1,3-Bis(p-chlorphenylsulfonyl)benzol.

Besonders bevorzugte difunktionelle Verbindungen V sind:

4,4'-Bis(p-chlorphenylsulfonyl)biphenyl,

4,4'-Bis(p-chlorphenylsulfonyl)diphenylether,

4,4'-Bis(p-chlorbenzoyl)biphenyl sowie

4,4'-Bis(p-chlorbenzoyl)diphenylether.

Die Reaktion wird üblicherweise in Lösung durchgeführt. Vorteilhaft sind polare aprotische, hochsiedende Lösemittel, wie tertiäre Amide, N-substituierte Lactame, tetrasubstituierte Harnstoffe, N-substituierte cyclische Imide, Dialkyl-, Diarylsulfone, tertiäre Arylsulfonsäureamide, 1-Alkyl-und/oder 1-Aryl-1-Oxophospholane und deren Mischungen. Bevorzugt werden N-Methylpyrrolidon, Diphenylsulfon, N,N-Dimethylformamid und insbesondere N,N-Dimethylbenzamid. Bei Verwendung von Diphenylsulfon, das bei Raumtemperatur fest ist, wird zweckmäßigerweise bei der Aufarbeitung ein weiteres Lösemittel, wie z.B. 1,2-Dichlorbenzol, eingesetzt, um das Ausfällen des Diphenylsulfons zur verhindern. Das Volumenverhältnis Lösemittel/Feststoff liegt zwischen 1 : 1 und 20 : 1.

Das Endstadium der Reaktion wird vorzugsweise unter wasserfreien Bedingungen durchgeführt. Insbesondere ist es vorteilhaft, kristallwasserhaltige Alkalisulfide durch Destillation mit einer Verbindung zu entwässern, die zur Ausbildung von Azeotropen in der Lage ist, wie z.B. Toluol, Anisol oder Di-n-butylether. Diese Entwässerung kann auch in situ durchgeführt werden. Alternativ ist auch die vorherige Entwässerung der Salze unter Vakuum in de Wärme möglich.

Eine andere bevorzugte Verfahrensvariante besteht darin, unmittelbar von der hydratisierten Form der Alkalisulfide auszugehen und die azeotrope Entwässerung gleichzeitig mit der Reaktion durchzuführen. In diesem Falle enpfiehlt es sich, ein Schleppmittel (VI) und Salze (VII) mit zumindest gewisser Löslichkeit im organischen Reaktionsmedium zuzusetzen.

Geeignete Salze in diesem Sinne sind:

-die Alkali-und Erdalkalisalze von aliphatischen, aromatischen oder araliphatischen Mono-und Dicarbonsäuren mit bis zu 10 C-Atomen

-die Alkali-und Erdalkalisalze von Mono-oder Disulfonsäuren, deren organischer ein-bzw. zweiwertiger Rest maximal 10 C-Atome umfaßt

-Alkali-und Erdalkalibromid oder -iodid

-tetrasubstituiertes Phosphoniumbromid oder -iodid, wobei jeder Substituent ein organischer Rest mit maximal 16 C-Atomen ist.

Die Menge dieser Salze liegt -bezogen auf die Molmenge des eingesetzten Alkalisulfids -zwischen 1 und 200 %, vorzugsweise zwischen 10 und 150 %.

Als Schleppmittel (VI) eignen sich Ether,Alkane, Cycloalkane und Alkylaromaten, deren Siedepunkt bei Normaldruck zwischen 40 und 160 °C liegt. Besonders geeignet sind Cyclohexan und Di-n-butylether, insbesondere aber Toluol, Xylol und Heptan. Die Menge des Schleppmittels (VI) hängt sowohl von der Menge des auszukreisenden Wassers als auch von der Verfahrensführung ab.

Die Reaktion sollte so durchgeführt werden, daß kein Luftsauerstoff zugegen ist, beispielsweise in Gegenwart eines Inertgases, wie Stickstoff. Es empfiehlt sich daher, die eingesetzten Lösemittel auf geeignete Weise vom gelösten Sauerstoff zu befreien.

Im Falle des Einsatzes einer relativ großen Menge S-haltiger Verbindungen I wird kurz vor Ende der Reaktion zweckmäßigerweise ein Alkylierung-, Acylierungs-oder Arylierungsmittel zugesetzt, um die thermischen Eigenschaften des Polymeren zu verbessern.

Geeignete Alkylierungsmittel sind $C_{1-3}$-Alkyhalogenide, wie z.B. Methylchlorid oder Ethylbromid, Dimethylsulfat oder Arylsulfonsäuralkylester, dessen zugrundeliegender Alkohol maximal 3 C-Atome enthält.

Als Acylierungsmittel kommen insbesondere Acetylchlorid, Acetanhydrid und Benzoylchlorid in Frage.

Geeignete Arylierungsmittel sind durch CO-und $SO_2$-Gruppen aktivierte aromatische Halogenverbindungen, wie z.B. 4-Chlordiphenylsulfon oder 4-Chlorbenzophenon. Geeignet sind aber auch die aufgeführten difunktionellen aromatischen Verbindungen III, IV oder V.

Die zweistufige Reaktionsführung sieht beispielsweise folgendermaßen aus:

1. Zunächst werden die eingesetzten Lösemittel von Sauerstoff befreit.
2. Dann wird das Natriumsulfid entwässert.
3. Man setzt das difunktionelle aromatische Keton III und gegebenenfalls die difunktionelle aromatische Verbindung IV oder V zu und erhitzt unter Schutzgasatmophäre auf die gewünschte Reaktionstemperatur.
4. Man hält die Mischung bis zu 36 Stunden bei dieser Temperatur.
5. Gegebenenfalls kann ein Alkylierungs-, Acylierungs-oder Arylierungsmittel zugesetzt werden.
6. Man fällt das Produkt aus und reinigt es durch Auskochen mit einem polaren Lösemittel.

Günstiger ist es jedoch, einstufig zu arbeiten. Danach geht man unmittelbar von einem Gemisch eines wasserhaltigen Alkalisulfids (I), einer anorganischen Base (II), einem difunktionellen Keton (III), einer difunktionellen aromatischen Verbindung (IV oder V), einem Salz (VII) und einem Schleppmittel (VI) aus, erhitzt das Gemisch, wobei zunächst das Wasser mit Hilfe des Schleppmittels ausgekreist und dann das Schleppmittel abdestilliert wird, und führt die Reaktion bei erhöhter Temperatur zu Ende. Man kann auch nur die Komponenten III, IV und VI vorlegen und eine wäßrige Lösung der Komponenten I, II und VII in einem solchen Maße zutropfen, daß das in das Reaktionsgefäß tropfende Wasser praktisch gleichzeitig mit dem Schleppmittel ausgekreist wird.

Die erhaltenen Produkte weisen ein Molekulargewicht von 2 000 bis 500 000 auf. Wünscht man ein hohes Molekulargewicht, wie es für den Spritzguß, die Extrusion oder die Herstellung von Filmen erwünscht ist, so empfiehlt es sich, unter Bedingungen zu arbeiten, bei denen das sich bildende Polymere in jedem Stadium der Reaktion in Lösung bleibt. Dies bedeutet, daß man die Reaktion bei höherer Temperatur durchführt, ein Lösemittel mit verbesserter Löslichkeit für die Polymeren, wie z.B. Dimethylbenzamid einsetzt und/oder neben den Ketonen III auch die difunktionellen Verbindungen IV oder V einsetzt.

Niedermolekulare Produkte können beispielsweise als Komponenten von Polymerblends oder für die Metallbeschichtung mit anschließender Härtung verwendet werden.

Die Messung der Viskosität $eta_{red}$ erfolgt analog zu DIN 53 728 durch Auflösung von 0,5 g Substanz in 100 $cm^3$ konzentrierter Schwefelsäure und anschließender Messung bei 25 °C.

Die $T_m$-Werte werden mit einem Perking-Elmer-Calorimeter DSC-1B gemessen; die angegebenen Werte wurden beim zweiten Aufheizen erhalten.

## Beispiel 1

20,00 g $Na_2S \cdot xH_2O$ (90,4 mmol; $Na_2S$-Gehalt 35,3 %) werden, zuletzt bei 220 °C, im Vakuum entwässert. Nach Zugabe von 32,09 g (90,4 mmol) 4,4'-Dichlorisophthalophenon und 120 ml Dimethylbenzamid (frisch entgast) wird 9 Stunden unter Stickstoff bei 230 °C gerührt. Die Mischung wird nach Abkühlen mit dem gleichen Volumen Ethanol versetzt, der Rückstand abgesaugt und jeweils 1 Stunde mit je 300 ml Ethanol und Wasser ausgekocht. Man erhält 27,1 g eines Polymeren mit nachfolgenden wiederkehrenden Einheiten, $eta_{red}$ = 0,20, $T_m$ = 317 °C und $T_g$ = 116 °C.

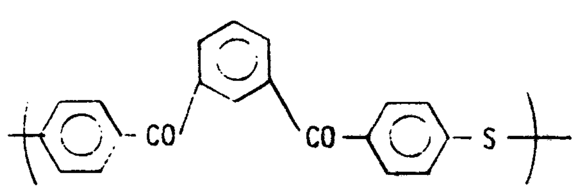

Beispiel 2

Wie in Beispiel 1 werden 20,00 g $Na_2S \cdot xH_2O$ - (90,4 mmol) getrocknet und mit einer Mischung aus 16,05 g (45,2 mmol) 4,4'-Dichlorisophthalophenon und 16,05 (45,2 mmol) 4,4'-Dichlorterephthalophenon in 120 ml Dimethylbenzamid 9 Stunden bei 230 °C unter Stickstoff gerührt. Die Aufarbeitung analog zu Beispiel 1 ergibt 26,85 g eines Polymeren mit nachfolgenden wiederkehrenden Einheiten: $eta_{red}$ = 0,34, $T_m$ = 303 °C; Tg = 151 °C.

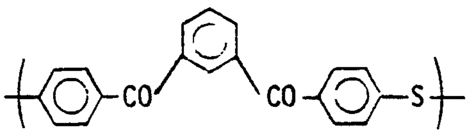

50 %

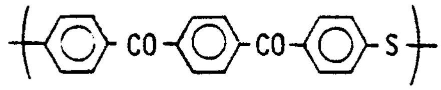

50 %

Beispiel 3

Wie im Beispiel 1 werden 20,00 g (90,4 mmol) $Na_2S.xH_2O$ getrocknet und mit einer Mischung aus 25,71 g (72,4 mmol) Dichlorterephthalophenon und 5,20 g (18,1 mmol) 4,4'-Dichlordiphenylsulfon in 120 ml Dimethylbenzamid 6 Stunden bei 260 °C unter Stickstoff gerührt. Die Aufarbeitung analog zu Beispiel 1 ergibt 25,5 g eines Polymeren mit nachfolgenden wiederkehrenden Einheiten: $eta_{red}$ = 0,23; $T_m$ = 367 °C; $T_g$ = 205 °C

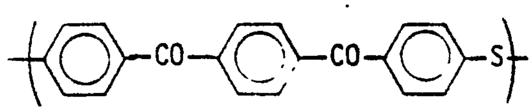

80 %

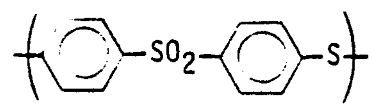

20 %

Beispiel 4

Wie in Beispiel 1 werden 20,00 g (90,4 mmol) $Na_2S.xH_2O$ getrocknet und mit einer Mischung aus 15,25 g (42,95 mmol) 4,4'-Dichlorisophthalophenon, 15,25 g (42,95 mmol) 4,4'-Dichlorterephthalophenon und 2,26 g (4,50 mmol) 4,4'-Bis(p-chlorbenzolsulfonyl)biphenyl in 120 ml Di methylbenzamid 9 Stunden bei 230 °C unter Stickstoff gerührt. Die Aufarbeitung analog zu Beispiel 1 ergibt 26,6 g eines Polymeren mit nachfolgenden wiederkehrenden Einheiten: $eta_{red}$ = 0,42; $T_m$ = 298 °C; $T_g$ = 158 °C

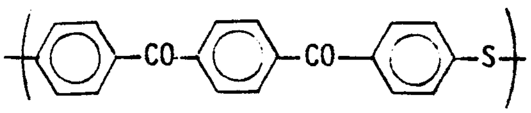

etwa 47,5 %

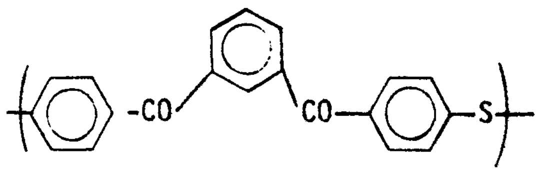

etwa 47,5 %

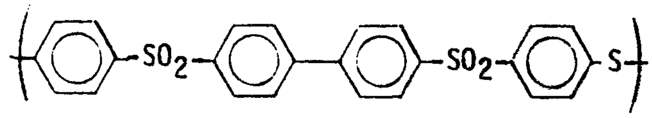

etwa 5,0 %

**Beispiel 5**

Ein Gemisch von 100,00 g $Na_2S \bullet xH_2O$ - (415,40 mmol), 4,0 g Natriumcarbonat und 33,90 g Dikaliumsalz des 4,4'-Dihydroxydiphenylsulfons - (103,85 mmol), hergestellt nach DE-PS 24 25 166, wird nach Zusatz von 100 ml Wasser durch Erwärmen in eine homogene Lösung überführt und im Laufe von 4 Stunden in eine kräfig gerührte siedende Mischung aus 184,48 g 4,4'-Dichlorterephthalophenon (519,24 mmol), 300 g Diphenylsulfon und 100 ml Xylol getropft, wobei des Wasser gleichzeitig ausgekreist wird. Unter Abdestillieren des Xylols wird 10 Stunden bei 230 °C, 5 Stunden bei 270 °C und 4 Stunden bei 330 °C gerührt. Danach wird auf 300 °C abgekühlt und innerhalb von 15 Minuten eine Lösung von 5,0 g 4,4'-Dichlordiphenylsulfon in 20 ml Dimethylbenzamid und 5 ml Anisol zugetropft, nach 15 Minuten nachgerührt und dann zunächst mit 300 ml Dimethylbenzamid und dann mit 600 ml Ethylenglykol versetzt. Die 100 °C heiße Mischung wird abgesaugt und der Rückstand zweimal mit Aceton und zweimal mit Wasser ausgekocht. Man erhält 177 g eines fast weißen Pulvers mit nachfolgenden wiederkehrenden Einheiten; $eta_{red}$ = 1.07 dl/g, $T_m$ = 362 °C.

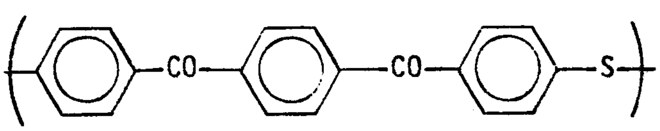

80 %

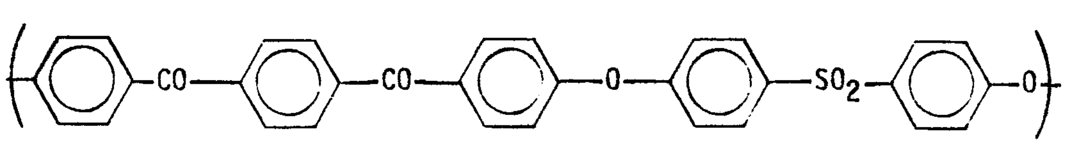

20 %

**Ansprüche**

1. Verfahren zur Herstellung von homo-und copolymeren Polyarylensulfiden,

dadurch gekennzeichnet,

daß das Polymere wiederkehrende Einheiten der Formel

(Ar-CO-AR-CO-AR-S)

enthält und erhalten wird durch Umsetzung von

I sulfidfreisetzenden Reagenzien, gegebenenfalls im Gemisch mit bis zu 50 Mol-% Bisthiophenolat oder Bisphenolat,

II gegebenenfalls anorganischen Basen,

III einem difunktionellen aromatischen Keton der Formel

Hal-Ar-CO-Ar-CO-Ar-Hal,

wobei Hal für Fluor oder insbesondere Chlor steht, und Ar den difunktionellen aromatischen Rest

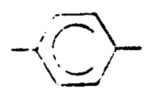 oder 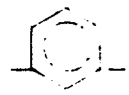

bezeichnet,

und gegebenenfalls einer weiteren difunktionellen aromatischen Verbindung der Formel

IV Hal -Ar -X -(Ar -Y)$_n$ -Ar -Hal

oder

V Hal -Ar -X -Ar -(Y)$_n$ -Ar -X -Ar -Hal ,

wobei Hal und Ar die bereits aufgeführten Bedeutungen haben, n den Wert O oder 1 hat und X und Y jeweils für die Gruppierungen -O-, -S-, -CO-und -$SO_2$-stehen.

2. Verfahren nach Anspruch 1,

dadurch gekennzeichnet,

daß man die Umsetzung in Abwesenheit von Sauerstoff bei Temperaturen zwischen 120 und 350 °C in einem polaren Lösemittel vornimmt.

3. Verfahren nach Anspruch 2,

dadurch gekennzeichnet,

daß man die Umsetzung in Abwesenheit von Wasser durchführt.

4. Verfahren nach den Ansprüchen 1 bis 3,

dadurch gekennzeichnet,

daß man als sulfidfreisetzendes Reagenz (I) ein Alkalisulfid einsetzt.

5. Verfahren nach Anspruch 4,

dadurch gekennzeichnet,

daß man, bezogen auf insgesamt 1 Mol difunktioneller Ausgangsverbindung III und gegebenenfalls IV, 0,8 bis 1,2 Mol Natriumsulfid einsetzt.

6. Verfahren nach den Ansprüchen 1 bis 5,

dadurch gekennzeichnet,

daß man die Reaktion in Dimethylbenzamid als Lösemittel bei einer Temperatur von 200 -260 °C unter Atmosphärendruck durchführt.

7. Verfahren nach den Ansprüchen 1 bis 6,

dadurch gekennzeichnet,

daß man kurz vor Ende der Reaktion ein Alkylierungs-, Acylierung-oder Arylierungsmittel zusetzt.

8. Verfahren nach den Ansprüchen 1 bis 7,

dadurch gekennzeichnet, daß man

-das wasserhaltige sulfidfreisetzende Reagenz (I),

die anorganische Base (II),

das difunktionelle aromatische Keton (III),

die difunktionelle aromatische Verbindung (IV oder V) Salze, die im organischen Reaktionsmedium zumindest teilweise löslich sind (VII), und

das Schleppmittel (VI)

vorlegt

-die Temperatur erhöht, wobei zuerst mit Hilfe des Schleppmittels das Wasser ausgekreist und dann das Schleppmittel abdestilliert wird

-die Polykondensation bei erhöhter Temperatur zu Ende führt.

9. Verfahren nach Anspruch 8.

dadurch gekennzeichnet,

daß man nur die Komponenten III, IV und VI vorlegt und

die wäßrige Lösung der Komponenten I, II und VII in einem solchen Maße zutropft, daß das zutropfende Wasser praktisch gleichzeitig mit dem Schleppmittel ausgekreist wird.

10. Polymer mit wiederkehrenden Einheiten der Formel

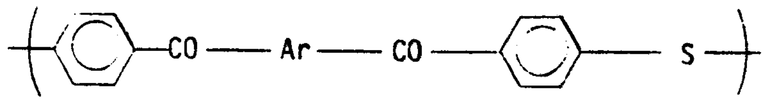

,

erhältlich nach den Ansprüchen 1 bis 9 durch Umsetzung von I und II mit

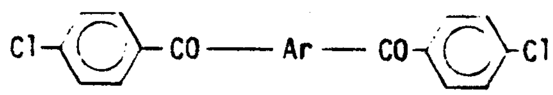

.

11. Copolymere Polyarylensulfide, erhältlich nach den Ansprüchen 1 bis 9, wobei die difunktionelle aromatische Verbindung IV die Formel

Cl -Ar - X -Ar -Cl

aufweist.

12. Copolymere Polyarylensulfide, erhältlich nach den Ansprüchen 1 bis 9, wobei die difunktionelle aromatische Verbindung V die Formel

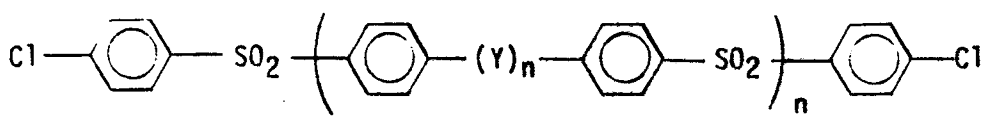

aufweist.

Europäisches Patentamt

# EUROPÄISCHER RECHERCHENBERICHT

Nummer der Anmeldung

EP 86 10 7469

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-B-2 009 323 (INVENTA AG FÜR FORSCHUNG UND PATENTVERWERTUNG) * Ansprüche; Beispiel 4 * | 1-3 | C 08 G 75/04 |
| A | DE-B-2 220 079 (INVENTA AG FÜR FORSCHUNG UND PATENTVERWERTUNG) * Anspruch 1; Beispiel 3 * | 1-3 | |
| D,A | DE-A-2 164 291 (IMPERIAL CHEMICAL INDUSTRIES LTD.) * Ansprüche 1-5; Seite 13, Zeile 8 - Seite 14, Zeile 11 * | 1,2 | |
| A | EP-A-0 001 768 (BASF AG) * Ansprüche * | 1-3 | |
| D,A | US-A-4 038 259 (PHILLIPS PETROLEUM CO.) * Anspruch 1; Beispiel 1 * | 1-4 | RECHERCHIERTE SACHGEBIETE (Int. Cl.4) |
| | | | C 08 G 75/00 |
| D,A | EP-A-0 001 879 (IMPERIAL CHEMICAL INDUSTRIES LTD.) * Zusammenfassung * | 1 | |

Der vorliegende Recherchenbericht wurde für alle Patentansprüche erstellt.

| Recherchenort | Abschlußdatum der Recherche | Prüfer |
|---|---|---|
| BERLIN | 22-10-1986 | HASS C V F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument